# EUROPEAN PATENT APPLICATION

(11) **EP 1 443 695 A2**
(43) Date of publication of application: **04.08.2004**
(21) Application number: 04001662.8
(22) Date of filing: 27.01.2004
(51) Int. Cl.: H04J 14/02

(54) **An optical transmission apparatus and an optical wavelength multiplex network therewith**

(30) Priority: 28.01.2003 JP 2003019067
(71) Applicant: FUJITSU LIMITED, Kawasaki-shi, Kanagawa 211-8588 (JP)
(72) Inventor: Miyata, Hideyuki, Kawasaki-shi, Kanagawa 211-8588 (JP); Tomofuji, Hiroaki, Kawasaki-shi, Kanagawa 211-8588 (JP); Onaka, Hiroshi, Kawasaki-shi, Kanagawa 211-8588 (JP); Takeno, Minoru, Kawasaki-shi, Kanagawa 211-8588 (JP)
(74) Representative: HOFFMANN - EITLE

(57) **Abstract**

A double-ring optical wavelength multiplex network is disclosed, which includes multiple optical transmission apparatuses that can reduce the unit cost of initially installing a small optical network while providing the flexibility to expand. For multiplexed optical signals arriving at a node, the optical transmission apparatus "drops" selected wavelengths for local delivery and "passes" others for continued transmission on the network. For optical signals originating ("added") at the node, the optical transmission apparatus wavelength multiplexes the "added" signals with the "passing" signals for transmission on the network. For "added" signals, the optical transmission apparatus blocks "passing" signals of the same wavelength.

## Description

### BACKGROUND OF THE INVENTION

### 1. Field of the Invention

The present invention generally relates to an optical transmission apparatus, and an optical wavelength multiplex network therewith, and especially relates to an optical transmission apparatus that includes an optical add/drop function for an optical wavelength multiplex network, and an optical wavelength multiplex network therewith.

### 2. Description of the Related Art

With explosive increases in demand for data communications mainly of Internet traffic, backbone networks are required to be capable of accommodating a great volume of traffic, and providing super-long-distance transmissions. At the same time, services available to users must be highly versatile, which requires a network to be economical, flexible, and reliable.

At present, with wavelength division multiplex (WDM) transmission technology and optical amplification technology, great traffic-accommodating capacity and super-long-distance transmissions of the network have become available, reducing transmission-line costs. However, compared with progress in expanding the capacity, and in reducing of the cost of a transmission line, node apparatuses (transmission apparatuses) are behind in regard to raising throughput and reducing costs, the node apparatuses being arranged on both ends of the transmission line.

For efficient operations and construction of a network, improvements of signal-processing capacity and cost reduction of the node apparatus (node) that distributes signals to users are essential. However, when the node apparatuses are configured by opto-electricity conversion and an electrical switching method for increasing the throughput, the size of the node becomes large, and consequently, the cost of the node increases, causing a problem that efficient operations and economical construction of the network cannot be attained.

Accordingly, in order that the node be capable of increased throughput, available at low cost, and made small in size, optical add/drop multiplexers (OADM), and optical cross connect (OXC) apparatuses for carrying out various processes in units of optical paths in the optical wavelength domain are being developed, replacing large-scale electronic circuits with optical parts (refer to patent reference 1).

An OADM node is a node that performs optical add/drop, and is widely used by metro networks and access networks. The OADM node intercepts and passes through optical signals, adding and dropping desired wavelengths. In this manner, optical paths are provided between nodes, signal connections are made, and communications between users connected to the OADM node are provided.

The OADM node is required to provide high performances and flexibility at low cost. Here, the performances that are required of the OADM node include high throughput, long transmission distance, scalability in terms of the number of nodes that can be arranged, and great processing capacity of each node. Further, the flexibility that is required of the OADM node includes a capability of providing an optical path by provisioning, a broadcasting function, and a protection function. These are the requirements to be realized at a low cost.

The requirements are currently answered by configuring an OADM apparatus using an optical multiplexer/demultiplexer, and an optical switch.

### (Patent reference 1)

### JP,11-174499,A.

Although the above-mentioned configuration is capable of providing optical paths as desired by provisioning, and processing all the wavelengths that are received, there is a problem in that initial unit cost becomes high when only a few wavelengths are required, the initial installation is for only the few required wavelengths, and the number of wavelengths is to be increased at a later stage. In other words, the initial cost per wavelength is high, which poses the problem.

Further, the average number of wavelengths usually dropped (branched) and added (inserted) by an OADM node is between 20% and 50% of all the wavelengths handled by the OADM node, with the remainder being passed through. In consideration of this fact, it is advantageous to limit the number of wavelengths that are processed (added/dropped) by each node, and to design a specialized node configuration for reducing the node cost.

Further, although OADM node apparatuses that process a few wavelengths are commercially marketed at present, wavelengths of the transmitting luminous source and the optical filter are fixed at predetermined wavelengths. In this case, although initial cost is reduced, the problem is that the network is not flexible, that is, providing future optical paths by provisioning cannot be carried out.

### SUMMARY OF THE INVENTION

It is a general object of the present invention to provide an optical transmission apparatus and an optical wavelength multiplex network therewith that will substantially obviate one or more of the problems caused by the limitations and disadvantages of the related art.

Features and advantages of the present invention are set forth in the description that follows, and in part will become apparent from the description and the accompanying drawings, or may be learned by practice of the invention according to the teachings provided in the description. Objects as well as other features and advantages of the present invention will be realized and attained by the optical transmission apparatus and the optical wavelength multiplex network therewith particularly pointed out in the specification in such full, clear, concise, and exact terms as to enable a person having ordinary skill in the art to practice the invention.

To achieve these and other advantages and in accordance with the purpose of the invention, as embodied and broadly described herein, the invention provides an optical transmission apparatus that reduces initial cost, and realizes a flexible network configuration and an optical wavelength multiplex network that employs the optical transmission apparatus.

In order to solve the above-mentioned problem, the present invention provides means as follows.

The optical transmission apparatus having an optical add/drop function for an optical wavelength multiplex network according to the present invention includes an optical branching (dropping) coupler for dividing wavelength multiplexed optical signals that are input into a wavelength multiplexed optical signal, which is called a passing signal, and another wavelength multiplexed optical signal, which is called a dropping signal, a filter for extracting an optical signal of a predetermined wavelength from the dropping signal, a laser for generating an optical signal of a wavelength (insertion wavelength) to be inserted by the optical transmission apparatus concerned, a blocking filter for blocking a wavelength contained in the passing signal, the wavelength to be blocked being the same as the insertion wavelength, and an optical coupler for coupling the optical signal of the insertion wavelength and the passing signal that passes through the blocking filter.

The blocking filter and the optical coupler may be replaced with a filter that is capable of serving the functions of the blocking filter and the optical coupler.

The filter for extracting an optical signal of a predetermined wavelength from the dropping signal is one of a fixed wavelength filter and a variable wavelength filter.

The present invention further includes an optical wavelength multiplex network that includes the optical transmission apparatus as described above, and is characterized by a double ring configuration having a HUB.

The optical transmission apparatus according to the present invention realizes a low initial cost, and further provides a flexible network configuration.

Further, where a filter that is capable of serving the functions of a blocking filter and an optical coupler is employed, according to the present invention, optical attenuation of the transmitted optical signal in the optical transmission apparatus can be made small, since one device (the filter) serves as the filter for inserting an optical signal to the transmission line, and the blocking filter for preventing the inserted optical signal from propagating more than a round on the transmission-line ring.

Since the optical wavelength multiplex network of the present invention is configured as a double ring network that has a HUB, the network offers high reliability, providing a protection function when a fault takes place.

According to the configuration of the present invention, all wavelength multiplexed optical signals are branched by the optical branching coupler, and a desired optical signal is extracted, so that wavelength allocation to each optical transmission apparatus in the network is dispensed with.

Further, since all the wavelengths of the network are branched, and a desired wavelength is selected, a common wavelength can also be selected by two or more nodes in the network such that an optical signal can be broadcast in the network.

Further, although the optical branching coupler passes selected wavelengths, the blocking filter blocks an optical signal having the same wavelength as an inserted optical signal, thereby cross talk of the optical signals is prevented from occurring.

### BRIEF DESCRIPTION OF THE DRAWINGS

Fig. 1 is a schematic diagram of an example of a network;
Fig. 2 is a schematic diagram of a first example of an optical transmission apparatus that has an optical add/drop function;
Fig. 3 is a schematic diagram of a second example of an optical transmission apparatus that has the optical add/drop function;
Fig. 4 is a schematic diagram of an example of an optical transmission apparatus using AOTF;
Fig. 5 is a schematic diagram of an example of a network, where a wavelength group is assigned to each node;
Fig. 6 shows how communications are accomplished in the network shown in Fig. 5;
Fig. 7 shows how branching and inserting are carried out for each wavelength group;
Fig. 8 is a schematic diagram of an example of a HUB that includes an optical add/drop multiplexer and an optical switch;
Fig. 9 is a schematic diagram of an example of a HUB that includes an optical filter and an optical group filter;
Fig. 10 is a schematic diagram of an example of a HUB that includes an optical add/drop multiplexer and a MEMS; and
Fig. 11 is a block diagram for explaining the case where a rejection filter and an optical coupler for adding a wavelength are independently arranged.

### DESCRIPTION OF THE PREFERRED EMBODIMENTS

According to the present invention, an optical device that has a variable wavelength function in one of the "drop" section and the "add" section of an OADM node is used. Specifically, a variable wavelength filter is used by the drop unit, and a fixed wavelength laser is used by the add unit; or, alternatively, a fixed wavelength filter is used by the drop unit, and a variable wavelength laser is used by the add unit. If a variable wavelength function is provided to one of the two units of the OADM in this manner, an optical path between desired nodes can be established.

Embodiments of the present invention are explained with reference to attached drawings.

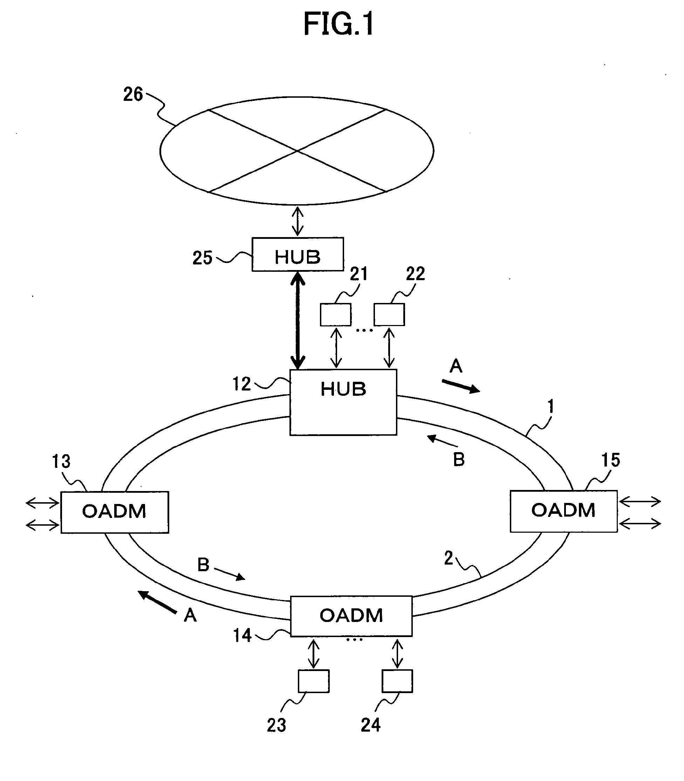

The network shown by Fig. 1 includes optical loop circuits 1 and 2 that constitute an optical transmission line, a HUB 12 and a HUB 25, each of which is a node for relaying traffic between networks, nodes, terminals, and the like, OADMs (Optical Add Drop Multiplexers) 13, 14, and 15, each of which performs branching (drop) and insertion (add) of optical signals, user terminals 21, 22, 23, and 24, and a second network 26.

The HUB 12 performs communications between the HUB 12 itself and the OADMs 13, 14, and 15, and communications with the HUB 25. In this manner, communications are made possible between the user terminals 21 through 24 connected to the optical loop circuits 1 and 2, and between the user terminals 21 through 24 and user terminals (not shown) connected to the second network 26.

In the present specification, descriptions are made mainly centering on a network consisting of a double optical loop as shown in Fig. 1. However, the optical transmission apparatus of the present invention is applicable not only to loop-like networks, but also to mesh type networks, and networks where a loop-like network and a mesh-like network are intermingled.

Further, each of the HUBs has functions of an OADM. Further, the number of HUBs, the number of OADMs, and the number of user terminals indicated in the present specification are only examples.

The loop-like network that includes the HUB 12 and the OADMs 13, 14, and 15 (optical transmission apparatuses) of Fig. 1 is a network of a double optical loop, wherein the optical loop circuit 1 transmits in the direction of A, and the optical loop circuit 2 transmits in the direction of B, and two-way communications are possible between the optical transmission apparatuses. Further, since the optical loop circuits 1 and 2 are closed-path, each optical transmission apparatus can perform communications on each loop circuit. That is, each optical transmission apparatus can perform independent communications using each of the optical loop circuits 1 and 2; and it is also possible that one of the optical loop circuits 1 and 2 is used, while the other is reserved as a stand-by. Further, each optical transmission apparatus may perform independent communications and duplex communications using the two optical loop circuits 1 and 2 under normal operating conditions, and in the case of a fault occurring in one of the optical loop circuits 1 and 2, or at an optical transmission apparatus, communications are still offered by avoiding the faulty section.

### (First optical transmission apparatus)

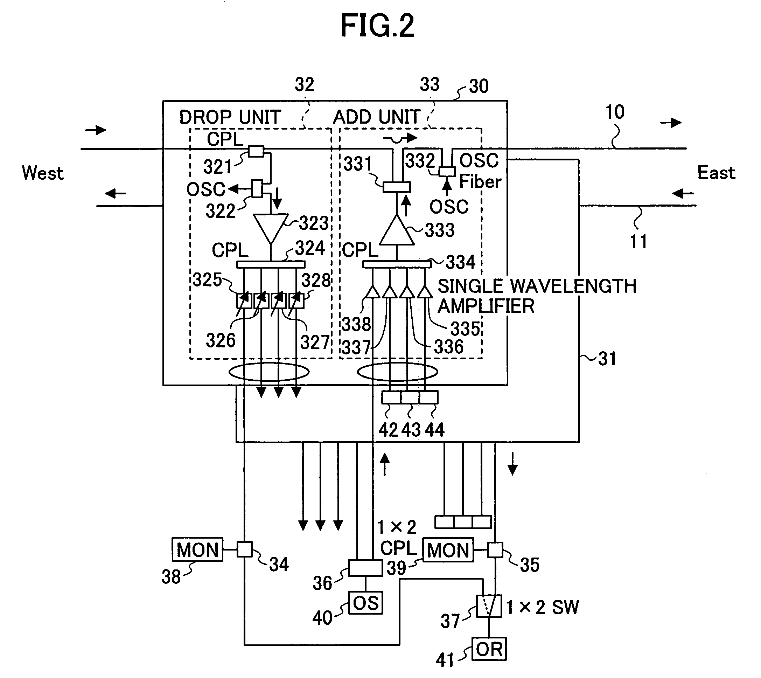

Fig. 2 shows an example of an optical transmission apparatus that has an optical add/drop function according to the present invention. In the example of Fig. 2, the "drop" unit of the OADM node employs a variable wavelength filter. Namely, the optical transmission apparatus shown by Fig. 2 includes an upward transmission unit 30 prepared on an optical transmission line 10 that goes from West to East, a downward transmission unit 31 prepared on an optical transmission line 11 that goes from East to West, optical splitters 34 and 35 for splitting an optical monitoring signal, a 1x2 coupler 36 for splitting optical signals provided by an optical transmitter 40, a selector 37 for selecting a signal from one of the two optical transmission lines 10 and 11, monitors 38 and 39 for monitoring the state of the circuits, an optical transmitter OS 40, an optical receiver OR 41, and fixed wavelength lasers 42, 43, and 44 for generating optical signals at insertion wavelengths based on monitoring results. Here, the 1x2 coupler 36 may be replaced with a selector for selecting a signal from one of the optical transmission lines 10 and 11 based on the monitoring results. Note that the optical transmitter 40 employs fixed wavelength lasers.

The upward transmission unit 30 includes a tee (Drop unit) 32 and an insertion unit (Add unit) 33. The tee 32 includes an optical branching coupler 321 for dividing an input optical signal into a passing signal that is to be passed through, and a dropping signal that is to be dropped, a supervisory-control-signal extraction filter 322 for extracting a supervisory control signal, a WDM preamplifier 323, a 1x4 coupler 324 for splitting the dropping signal, and variable wavelength filters 325 through 328 that can change the wavelength to be extracted.

Further, the insertion unit 33 includes a rejection/add filter 331, a supervisory-control-signal insertion filter 332 for inserting a supervisory control signal, a WDM amplifier 333 for amplifying a wavelength multiplexed optical signal, a 4x1 coupler 334 for coupling multiple optical signals, and single wave amplifiers 335 through 338. Here, the downward transmission unit 31 is configured similar to the upward transmission unit 30.

In addition, although the number of branched wavelengths and the number of the inserted wavelengths are each set at four in the present embodiment, the numbers are only examples, and are not limited to four.

The rejection/add filter 331 is for blocking a wavelength contained in the passing signal, which wavelength is the same as an inserted wavelength. This is necessary because the inserted wavelength should not agree with any of the wavelengths that are to be further passed through, and because the inserted wavelength should be prevented from propagating beyond a round on the loop transmission line ring.

The rejection/add filter 331 is also for inserting (add) an optical signal to the transmission line, in addition to preventing the inserted wavelength from propagating beyond one round on the ring transmission line. Accordingly, attenuation of the optical signals caused by the optical transmission apparatus is minimized.

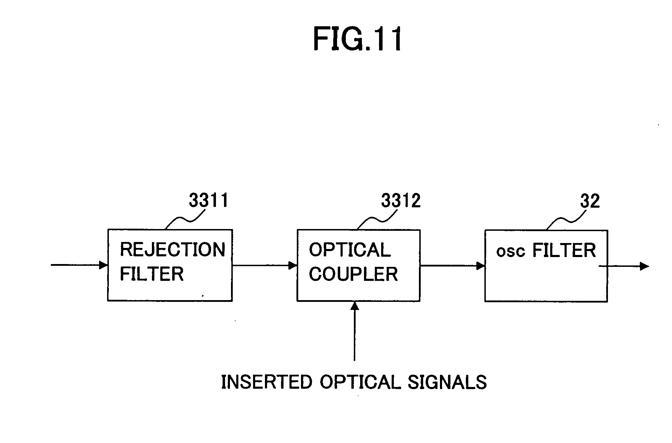

Here, if the optical attenuation of the transmitted optical signals in the optical transmission apparatus is not a great concern, a rejection filter 3311 and an optical coupler 3312 for inserting an optical signal to a transmission line may be independently provided as shown by Fig. 11.

Next, operations of the optical transmission apparatus shown by Fig. 2 are explained. Optical signals from West are input into the upward transmission unit 30. The optical signals input into the upward transmission unit 30 are supplied to the optical branching coupler 321, and divided into the passing signal that is to be passed through, and the dropping signal that is to be dropped. The passing signal that is branched by the optical branching coupler 321 is provided to the rejection/add filter 331, an optical signal having the same wavelength as an insertion wavelength is blocked, an optical signal to be inserted is added, an optical signal for surveillance is added by the supervisory-control-signal insertion filter 332, and a newly configured optical signal is output from the upward transmission unit 30.

The dropping signal is branched by the optical branching coupler 321 of the upward transmission unit 30. The supervisory-control-signal extraction filter 322 extracts a supervisory-control optical signal (OSC) from the dropping signal. The extracted supervisory-control optical signal contains an optical signal for carrying out surveillance and control of the optical transmission apparatus, the optical transmission line, and so on.

The dropping signal from which the supervisory-control optical signal is extracted is amplified by the WDM preamplifier 323, and is split by the 1x4 couplers 324, and provided to the variable wavelength filters 325 through 328, each of which extracts an optical signal of a respective predetermined wavelength to be dropped. An optical signal destined for the optical transmission apparatus concerned passes the variable wavelength filter 325, and is monitored by the monitor 38. Similarly, the optical signal transmitted by the optical transmission line 11 from East, and destined for the optical transmission apparatus concerned is monitored by the monitor 39.

Based on the output of the monitors 38 and 39, the selector 37 selects one of the optical signals destined for the optical transmission apparatus concerned, and the selected optical signal for the optical transmission apparatus concerned is provided to the optical receiver OR 41.

In this example, the optical signals extracted by the variable wavelength filters 325 through 328 are provided to user terminals, and the like.

Next, an explanation is made as to how an optical signal is inserted by the insertion unit 33, and transmitted from the upward transmission unit 30 prepared in the optical transmission line 10 that transmits signals from West to East.

The optical signal from the optical transmitter OS 40 is provided to the 1x2 coupler 36, then to the single wave amplifier 338, which amplifies the optical signal, and then to the 4x1 coupler 334. Optical signals of the fixed wavelength lasers 42, 43, and 44 are modulated by respective signals from the user terminals, and the like, amplified by the single wave amplifiers 335 through 337, and supplied to the 4x1 coupler 334.

The 4x1 coupler 334 bundles the inserted optical signals. The WDM amplifier 333 amplifies the bundled optical signal. The rejection/add filter 331 further bundles the bundled optical signal and the passing signal that is branched by the optical branching coupler 321. The further bundled optical signal is passed through the supervisory-control-signal insertion filter 332, and transmitted to the optical transmission line 10 serving communications from West to East. Here, the WDM amplifier 333 is not essential, and can be eliminated.

In this manner, the optical transmission apparatus having the optical add/drop function for the wavelength multiplex network according to the present invention includes the optical branching coupler 321 for dividing the input wavelength multiplexed optical signals into the passing signal and the dropping signal, the variable wavelength filters 325-328 for extracting the optical signals of the predetermined wavelengths from the dropping signal, the fixed wavelength lasers 42-44 for generating the optical signals to be inserted by the optical transmission apparatus concerned, the rejection filter 331 for blocking the optical signal of the same wavelength as the insertion wavelength from the passing signal, and the optical coupler 331 for coupling the passing signal and the inserted optical signal that is inserted at the insertion wavelength. In this manner, the optical path connection between desired nodes is established.

That is, the optical path connection between desired nodes is attained by branching a desired wavelength out of the wavelength signals transmitted.

Further, the optical attenuation of the transmitted optical signal in the optical transmission apparatus is reduced by using the rejection/add filter 331 that functions as a blocking filter for blocking an optical signal having the same wavelength as the insertion wavelength, and as an optical coupler for coupling the optical signal of insertion wavelength and the passing signal that is branched by the optical branching coupler.

### (Second optical transmission apparatus)

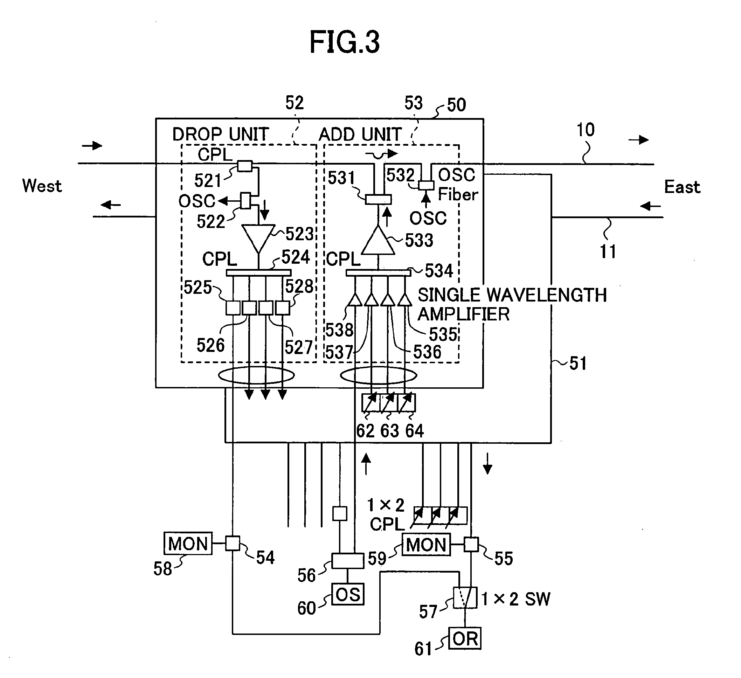

Fig. 3 shows another example of the optical transmission apparatus having the optical add/drop function according to the present invention. The present example is characterized by the insertion unit using variable wavelength lasers 62 through 64. The optical transmission apparatus shown by Fig. 3 includes an upward transmission unit 50 prepared on the optical transmission line 10 from West to East, a downward transmission apparatus 51 prepared on the optical transmission line 11 from East to West, splitters 54 and 55 for splitting the optical monitor signal, an optical transmitter 60, an optical receiver 61, a 1x2 coupler 56 for splitting an optical signal from the optical transmitter OS 60, monitors 58 and 59 for monitoring the state of the circuit, a selector 57 for selecting an optical signal of one of the two optical transmission lines 10 and 11 based on the monitoring result, and the variable wavelength lasers 62, 63, and 64 for generating optical signals to be inserted. Here, the 1x2 coupler 56 may be replaced with a selector for selecting a signal of one of the two optical transmission lines 10 and 11 based on the monitoring result. Note that the optical transmitter OS 60 employs variable wavelength lasers.

The upward transmission unit 50 includes a tee 52 and an insertion unit 53. The tee 52 includes an optical branching coupler 521 for dividing an input optical signal into the passing signal that is to be passed through, and the dropping signal that is to be dropped, a supervisory-control-signal extraction filter 522 for extracting a supervisory control signal, a WDM preamplifier 523, a 1x4 coupler 524 for splitting the dropping signal, and fixed wavelength filters 525 through 528 for extracting predetermined wavelengths.

The insertion unit 53 includes a rejection/add filter 531, a supervisory-control-signal insertion filter 532 for inserting a supervisory control signal, a WDM amplifier 533 for amplifying wavelength multiplexed optical signals, a 4x1 coupler 534 for coupling two or more optical signals, and single wave amplifiers 535 through 538. Here, the WDM amplifier 533 is not essential, and can be eliminated. Further, the downward transmission unit 51 is configured similar to the upward transmission unit 50.

Although the number of branched wavelengths and the number of the inserted wavelengths are set at four in the present example, the numbers are not limited to four, but can be set as desired.

The rejection/add filter 531 is for blocking a wavelength contained in the passing signal, which wavelength is the same as the inserted wavelength. This is necessary because the inserted wavelength should not agree with any of the wavelengths that are to be further passed through, and because the inserted wavelength should be prevented from propagating beyond a round on the loop transmission line ring.

The rejection/add filter 531 is also for inserting (add) an optical signal to the transmission line, in addition to preventing the inserted wavelength from propagating beyond one round on the ring transmission line. Accordingly, attenuation of the optical signals caused by the optical transmission apparatus is minimized.

Here, when the optical attenuation of the transmitted optical signal in the optical transmission apparatus is not a great concern, the rejection filter and the optical coupler for inserting optical signals in the transmission line can be independently provided like in the case of the first optical transmission apparatus described above (ref. Fig. 11).

In the present embodiment, i.e., the second optical transmission apparatus shown by Fig. 3, the fixed wavelength filters 525 through 528, and the variable wavelength lasers 62, 63, and 64 are used, while the first optical transmission apparatus shown by Fig. 2 uses the variable wavelength filters 325 through 328, and the fixed wavelength lasers 42, 43, and 44, respectively. Accordingly, operations of the second optical transmission apparatus shown by Fig. 3 are similar to those of the first optical transmission apparatus of Fig. 2, and explanation thereof is omitted.

As described above, the second optical transmission apparatus having the optical add/drop function in the wavelength multiplex network includes the optical branching coupler for dividing the input wavelength multiplex optical signal into the passing signal that is to be passed through, and the dropping signal that is to be dropped, the fixed wavelength filter for extracting the optical signals of predetermined wavelengths from the dropping signal, the variable wavelength lasers for generating the optical signals to be inserted by the optical transmission apparatus concerned, the rejection filter for blocking the optical signal of the same wavelength as the insertion wavelength from the passing signal, the optical coupler for coupling the passing signal that is passed through the rejection filter, and the optical signal that is inserted. Accordingly, the optical path connection between desired nodes is established.

That is, the optical path is established by setting the wavelength of the inserted signal to be in agreement with the wavelength of the branch optical signal filter of a node serving as the counterpart of the communications. In this case, the broadcasting function is restricted.

Further, the optical attenuation of the transmitted optical signal in the optical transmission apparatus can be minimized by using the rejection/add filter that blocks the optical signal of the same wavelength as the insertion wavelength, and couples the inserted optical signal and the passing signal that is branched by the optical branching coupler.

According to the embodiments having the configurations shown by Fig. 2 and Fig. 3, a low-cost system can be built by employing low-cost wavelength filters, laser optical signal sources, and rejection filters.

Further, according to the embodiments having the configurations shown by Fig. 2 and Fig. 3, an optical path can be provided as desired by provisioning.

Further, according to the embodiment having the configurations shown by Fig. 2 and Fig. 3, the insertion loss of the optical signal that is passed through the node is minimized, and an in-line amplifier can be eliminated, reducing the network cost.

Further, according to the embodiments shown by Fig. 2 and Fig. 3, the configuration can be changed and upgraded according to the required number of wavelengths, providing a low initial cost when a small number of wavelengths are initially installed.

Further, according to the configurations shown by Fig. 2 and Fig. 3, even in the case that the number of wavelengths is 32 or smaller, the initial cost is lowered, and, further, the network configuration is flexible.

Here, various kinds of variable wavelength filters can be used as the variable wavelength filters 325 through 328 of the configuration shown by Fig. 2.

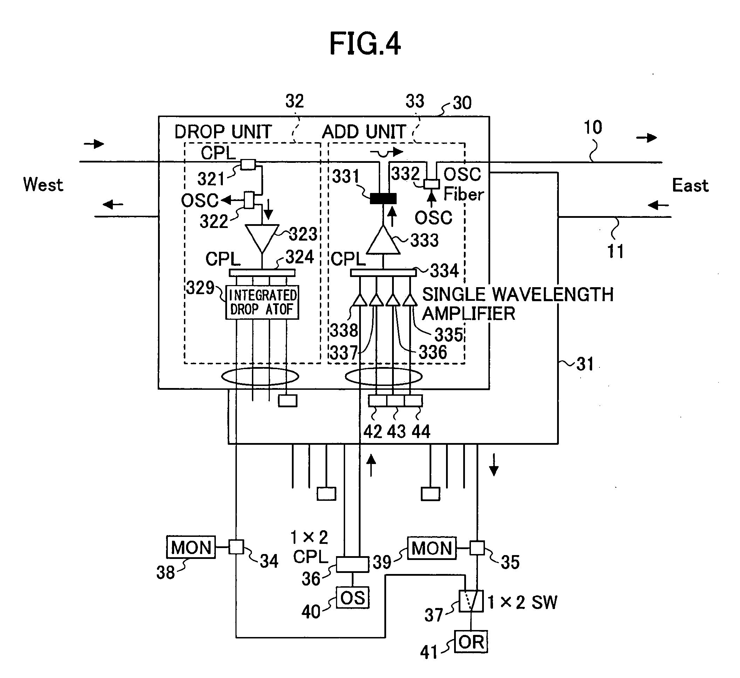

Fig. 4 shows an example, wherein an AOTF (Acousto-Optic Tunable Filter) 329 is employed as the variable wavelength filters 325 through 328.

The AOTF 329 selects an optical wavelength by an RF signal (electrical signal) being applied, the RF signal corresponding to the wavelength that is to be dropped. For example, when the wavelength multiplex optical signal containing wavelengths λ₁ through λₙ is input into the AOTF 329, and if the wavelengths λ₁ through λ₄ are to be extracted from the wavelengths λ₁ through λₙ, RF signals having frequencies f₁ through f₄ corresponding to the wavelengths λ₁ through λ₄, respectively, are applied to the AOTF 329.

Similarly, as the variable wavelength filters 325 through 328, a dielectric multilayer filter, a FGB (optical fiber Bragg-diffraction grid) type filter, and a Fabry-Perot type filter can be used.

### (Wavelength group)

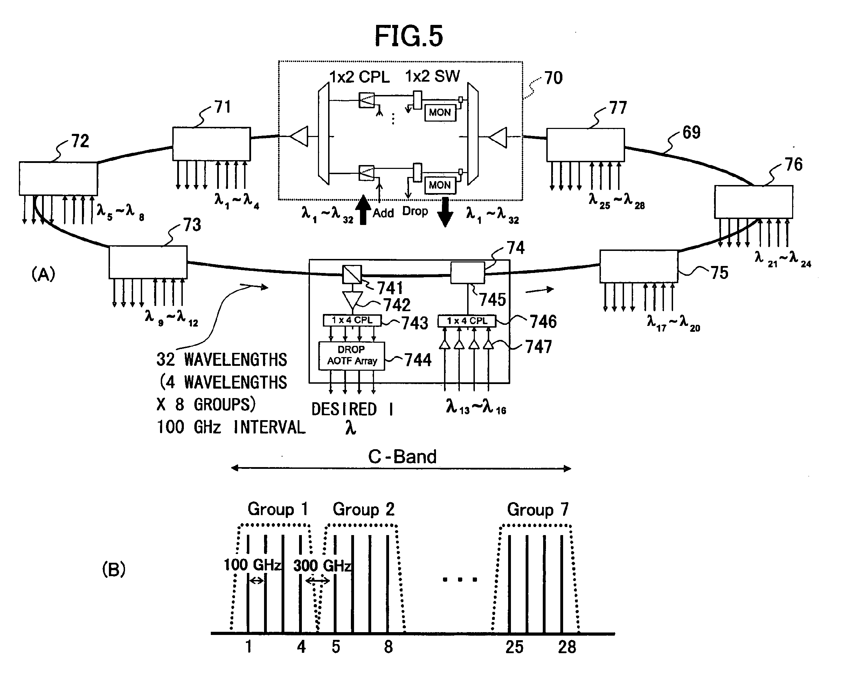

Fig. 5 shows an example of the network configuration, wherein a wavelength group (for example, a group of four wavelengths) is assigned to each node. The network shown at (A) of Fig. 5 includes an optical loop circuit 69, a HUB 70, and optical transmission apparatuses (nodes) 72 through 77. Here, two or more wavelength groups may be assigned to each of the optical transmission apparatuses 72 through 77.

Each of the HUB 70 and the optical transmission apparatuses 72 through 77 branches (drops) and adds (inserts) optical signals transmitted in the optical loop circuit 69 based on the wavelength group, i.e., in units of wavelength groups, thereby providing communications between the HUB 70 and the optical transmission apparatuses 72 through 77, and communications between the optical transmission apparatuses 72 through 77. In this manner, communications are provided between user terminals connected to the HUB 70 and the optical transmission apparatuses 72 through 77.

The wavelength groups are defined as shown at (B) of Fig. 5, each wavelength group including four wavelengths in the present example. Group 1 includes the wavelengths λ₁ through λ₄, Group 2 includes the wavelengths λ₅ through λ₈, and so on up to Group 7 that includes the wavelengths λ₂₅ through λ₂₈. Although an illustration is omitted, Group 8 including wavelengths λ₂₉ through λ₃₂ is assigned to the HUB 70. Each wavelength has an interval of 100 GHz. In addition, an insertion wavelength can be selected as desired, not limited to the plan of the present example.

As shown at (A) of Fig. 5, the optical transmission apparatuses 71 through 77 are set up so that the Groups 1 through 7, respectively, are inserted. Further, the HUB 70 can branch and insert all the Groups.

That is, the wavelengths to be inserted are fixed to each of the optical transmission apparatuses 71 through 77; however, the optical transmission apparatuses 71 through 77 can branch (drop) any wavelength as desired.

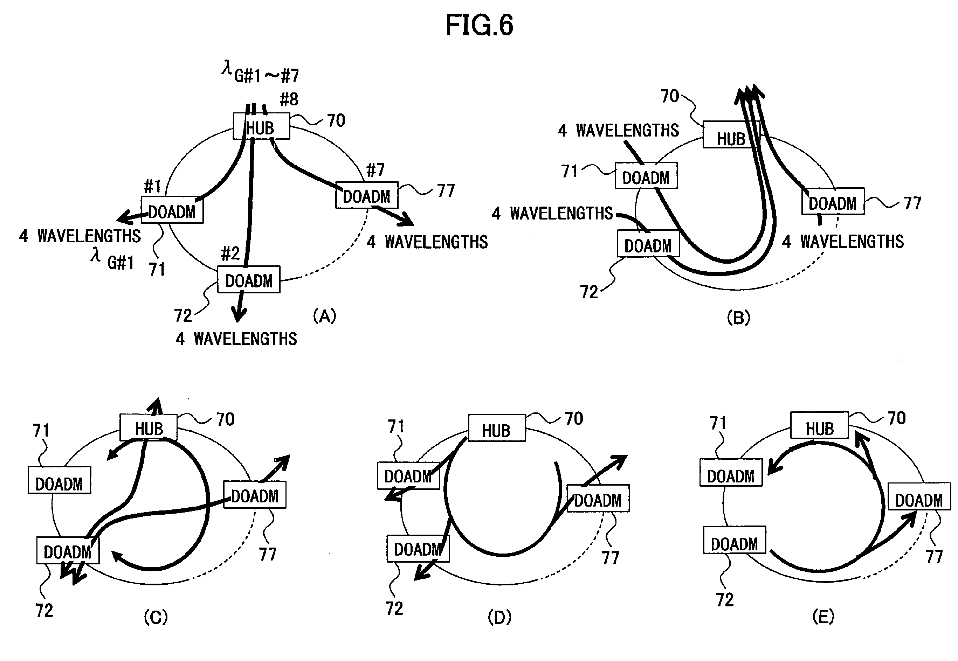

Communication modes of the network shown by Fig. 5 are explained using Fig. 6. At (A) of Fig. 6, communications are carried out from the HUB 70 to each of the nodes (the optical transmission apparatuses 71 through 77), using four wavelengths per node. Here, the HUB 70 transmits optical signals at the wavelengths assigned to Group 1, Group 2, and up to Group 7, which are received by the nodes 71, 72 and up to 77, respectively.

At (B) of Fig. 6, communications are carried out to the HUB 70 from each of the nodes 71, 72 and up to 77, each node using four wavelengths. Here, the nodes 71, 72 and up to 77 transmit optical signals at the wavelengths assigned to Group 1, Group 2 and up to Group 7, respectively. The HUB 70 receives all the optical signals transmitted by the wavelengths of all the Groups.

At (C) of Fig. 6, the case is shown where communications between each node and the HUB and between the nodes are carried out. In this example, the HUB 70 communicates with the node 72 by the HUB 70 transmitting optical signals at the wavelengths assigned to Group 8, and receiving optical signals at the wavelengths assigned to Group 2; and the node 72 receiving the optical signals at the wavelengths assigned to Group 8, and transmitting the optical signals at the wavelengths assigned to Group 2. Further, in this example, the node 77 communicates with the node 72 by the node 77 transmitting optical signals at the wavelengths assigned to Group 7, and receiving optical signals at the wavelengths assigned to Group 2; and the node 72 receiving the optical signals at the wavelength assigned to Group 7, and transmitting the optical signals at the wavelength assigned to Group 2.

At (D) of Fig. 6, the case where broadcasting communications are carried out from the HUB 70 to each node is shown. An optical signal at a wavelength assigned to Group 8 is transmitted from the HUB 70, and is received by the nodes 71 through 77.

At (E) of Fig. 6, the case is shown where broadcasting communications are carried out from a node to all the nodes including the HUB 70. An optical signal at a wavelength assigned to Group 2 is transmitted to the node 72, and is received by the HUB 70 and the nodes 71, and 73 through 77.

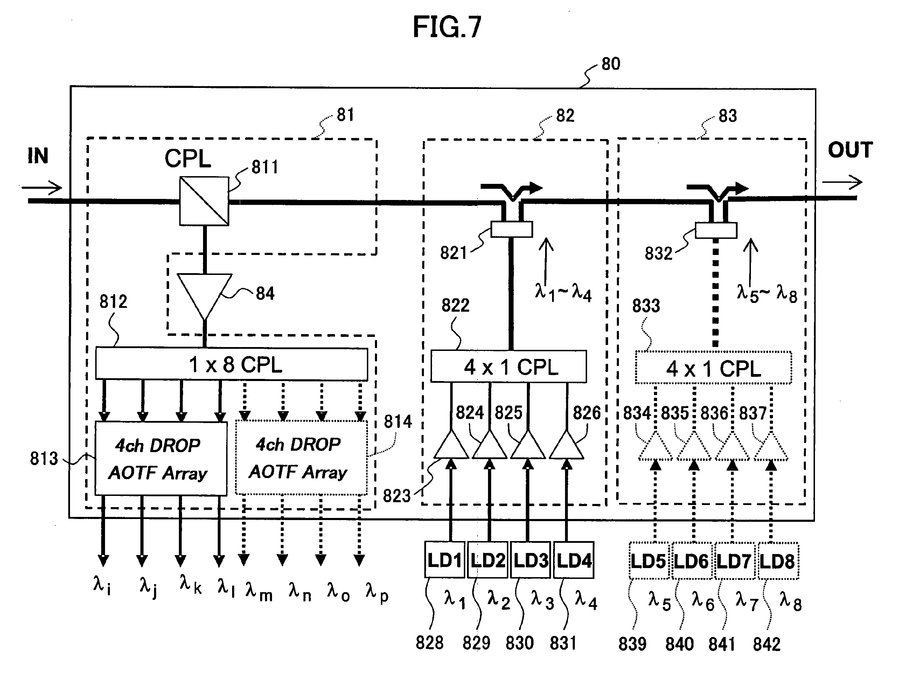

Branching (drop) and insertion (add) of wavelengths in units of wavelength groups performed by each optical transmission apparatus are explained with reference to Fig. 7.

An optical transmission unit 80 shown by Fig. 7 includes a tee 81, insertion units 82 and 83, and an optical amplifier 84. The tee 81 includes a coupler 811 for dividing an input signal into two parts, namely a passing signal that is to be passed through, and a dropping signal that is to be dropped, a 1x8 coupler 812 for splitting the dropping signal into eight optical signals, and AOTFs 813 and 814 prepared for every four wavelengths. The insertion unit 82 includes a rejection/add filter 821, a 4x1 coupler 822 for coupling four input optical signals, and single wave amplifiers 823 through 826 prepared for every wavelength. Similarly, the insertion unit 83 includes a rejection/add filter 832, a 4x1 coupler 833 for coupling four input optical signals, and single wave amplifiers 834 through 837 prepared for every wavelength. The single wave amplifiers 823 through 826, and 834 through 837 amplify optical signals from laser diodes 828 through 831 and 839 through 842, respectively, the optical signals being modulated by signals from user terminals, etc. Further, AOTFs 813 and 814 are controlled such that eight desired wavelengths are extracted.

In this manner, the wavelength multiplexed optical signal that is input to the optical transmission unit 80 is split by the tee 81 into the dropping signal and the passing signal, optical signals are inserted by the insertion units 82 and 83, and output from the optical transmission unit 80. Here, the insertion units 82 and 83 add the optical signals at the wavelengths λ₁ through λ₄ and the wavelengths λ₅ through λ₈, respectively, to the passing signal supplied by the tee 81. For the optical signals at the wavelengths λ₁ through λ₄ and the wavelengths λ₅ through λ₈ to be added, the rejection/add filters 821 and 832, respectively, block optical signals that are contained in the passing signal and have the same wavelength as a wavelength to be inserted.

Further, the dropping signal that is split by the tee 81 is amplified by the optical amplifier 84, is further split into eight optical signals by the 1x8 coupler 812, which eight signals are supplied to the AOTF 813 and 814. The AOTF 813 and 814 pass desired wavelengths based on control from the outside. Then, the optical signals at desired wavelengths λᵢ through λₚ are obtained from the AOTF 813 and 814 that are set at the desired wavelengths to drop. The optical signals are provided to user terminals, and the like.

Thus, by configuring the optical transmission apparatus such that branching (drop) and inserting (add) are carried out on the wavelength group basis as described above, the rejection filter can be designed to block a certain group of wavelengths, and the following four advantages are also obtained.
(1) Since a group of wavelengths is assigned to each node, the wavelength range required of the fixed wavelength laser or the fixed wavelength filter of the node is,limited by the definition of the wavelength group. Accordingly, requirements for the amplification characteristics of the optical amplifiers arranged in front of the fixed wavelength filter or after the fixed wavelength laser of the node are relaxed, i.e., a low-cost amplifier capable of only narrower-band amplification can be used. Since the optical amplifiers represent a significant portion of the cost of the node, the relaxed frequency bandwidth requirements greatly contribute to reducing the cost.
(2) Since a group of wavelengths is assigned to each node, wavelength assignment is simplified, and network operations become simple.
(3) Since the rejection filter handles wavelengths that are grouped, rather than handling discrete wavelengths, the cost thereof can be lowered.
(4) Since expansion of the system is carried out in increments of wavelength groups, system design becomes simple.

### (Protection)

Next, protection, which is available when using the double optical loop network as shown in Fig. 1, is explained.

In the following example, the protection function is provided to the HUB; however, the protection function may be provided to a node other than the HUB.

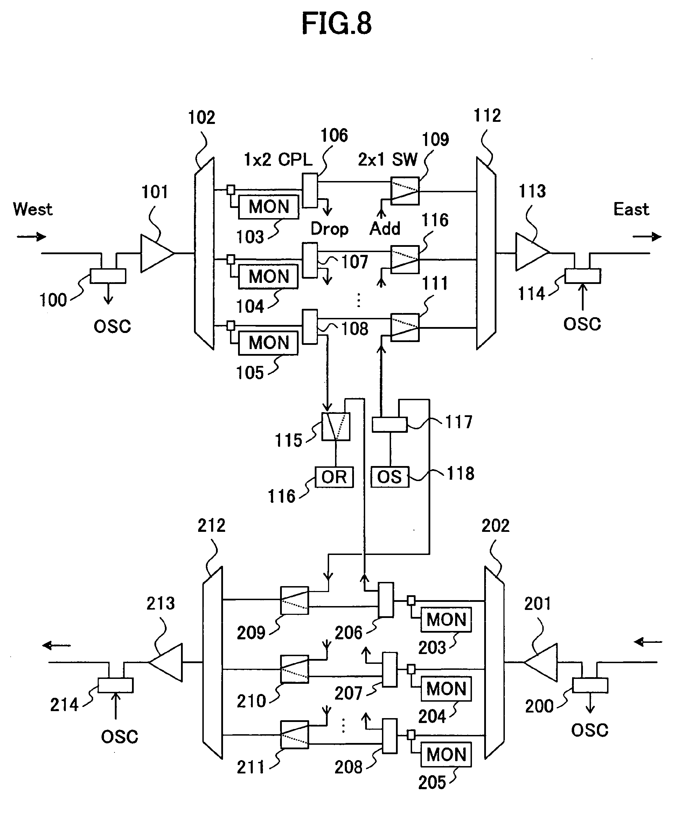

Fig. 8 shows an example of a HUB that employs an optical demultiplexer, an optical multiplexer, and optical switches. The HUB includes supervisory-control-signal extraction filters 100 and 200 for extracting a supervisory control signal, WDM amplifiers 101, 113, 201, and 213 for amplifying a wavelength multiplexed optical signal, optical demultiplexers 102 and 202, monitors 103, 104, 105, 203, 204, and 205 for monitoring wavelengths that are split, 1x2 couplers 106, 107, 108, 206, 207, and 208 for dividing an input wavelength multiplexed optical signal into a passing signal and a dropping signal, 2x1 switches 109, 110, 111, 209, 210, and 211 for inserting optical signals at insertion wavelengths, optical multiplexers 112 and 212, an optical receiver 116, a 2x1 switch 115 for selecting a signal from one of the upward and downward transmission lines, an optical transmitter 118, and a 1x2 coupler 117 for splitting the signal from the optical transmitter 118.

The 1x2 coupler 117 splits an optical signal from the optical transmitter 118 into two optical signals. One of the divided optical signals is provided to the upward transmission line (from West to East) via the 2x1 switches 109, 110, and 111. The other of the divided optical signals is provided to the downward transmission line (from East to West) via the 2x1 switches 209, 210, and 211.

The optical signal received from the upward transmission line is provided to the 2x1 switch 115 through the 1x2 couplers 106, 107, and 108. Further, the optical signal received from the downward transmission line is provided to the 2x1 switch 115 through the 1x2 couplers 206, 207, and 208. Then, the 2x1 switch 115 selects one of the upward and downward transmission lines for receiving the optical signal, and the selected optical signal is received by the optical receiver 116.

In this manner, the 2x1 switch 115 is controlled such that use of a faulty transmission line is avoided based on the monitoring result, and communications are provided using a normal transmission line.

Here, the 1x2 couplers 106, 107, and 108 and 1x2 couplers 206, 207, and 208 may be replaced with 2x1 switches, and the 2x1 switch 115 may be replaced with a 2x1 coupler.

In this manner, each optical transmission apparatus can operate using one of the transmission lines as an operating circuit, while the other transmission line serves as the standby circuit. Further, when a circuit or an optical transmission apparatus becomes faulty, the above configuration allows communications to continue by avoiding the faulty circuit or faulty optical transmission apparatus, reducing the influence due to the fault to a minimum. Accordingly, the 1x2 couplers 106, 107, and 108, 1x2 couplers 206, 207, and 208, and the 2x1 switch 115 constitute a protection unit.

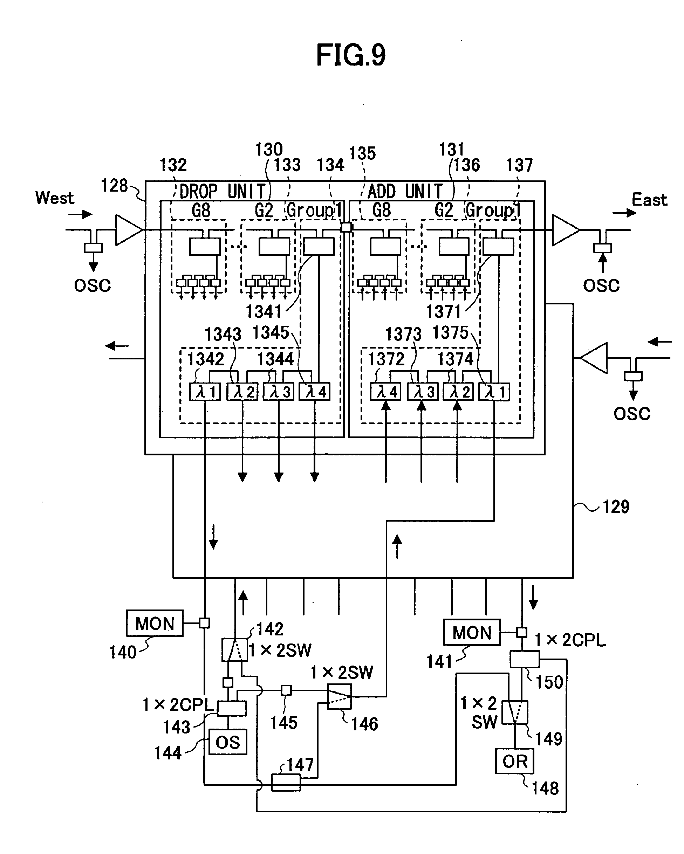

Fig. 9 shows an example of a HUB that includes an optical filter and an optical group filter. The HUB includes an upward transmission unit 128, a downward transmission unit 129, monitors 140 and 141 each monitoring a single wavelength, 1x2 couplers 143, 147, and 150, 2x1 switches 142, 146, and 149, an optical receiver 148, and an optical transmitter 144.

The upward transmission unit 128 includes a tee 130 and an insertion unit 131. The tee 130 includes optical group filters 132, 133, and 134 for extracting wavelengths of a predetermined wavelength group. The insertion unit 131 includes optical group filters 135, 136, and 137 for inserting wavelengths of a predetermined wavelength group, and for blocking wavelengths that are the same as the wavelengths of the predetermined wavelength group.

Further, the optical group filter 134 for extracting wavelengths of a predetermined wavelength group includes a wavelength group filter 1341 for extracting the wavelengths of the predetermined wavelength group, and single wavelength filters 1342 through 1345, each extracting a single wavelength. Other optical group filters 132 and 133 are configured the same as the optical group filter 134.

Further, the optical group filter 137 for inserting wavelengths, and for blocking the same wavelengths as the wavelengths that are inserted includes a wavelength group filter 1371 for inserting the wavelengths, and for blocking the same wavelengths as the wavelengths inserted, and single wavelength filters 1372 through 1375, each inserting and blocking a single wavelength. Other optical group filters 135 and 136 are configured the same as the optical group filter 137.

In this manner, the same functions as the HUB shown by Fig. 8 are obtained.

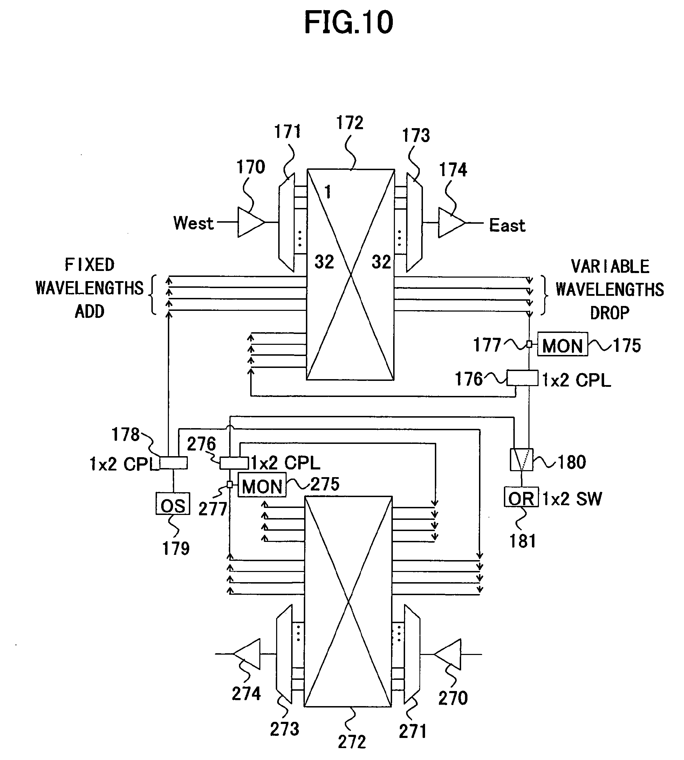

Fig. 10 shows an example of a HUB that includes an optical demultiplexer, an optical multiplexer, and a MEMS (Micro Electro-Mechanical Systems) switch. The HUB includes WDM amplifiers 170, 174, 270, and 274 for amplifying wavelength multiplexed optical signals, optical demultiplexers 171 and 271, MEMS switches 172 and 272, optical multiplexers 173 and 273, monitors 175 and 275 for monitoring optical signals in units of wavelengths, 1x2 couplers 176 and 276, filters 177 and 277 for extracting monitoring signals, a 2x1 switch 180, an optical transmitter 179, and an optical receiver 181.

In this manner, the same functions as the configuration shown by Fig. 8 are obtained.

As described above, the present invention provides the optical transmission apparatus, and the optical wavelength multiplex network employing the optical transmission apparatus that reduce the initial cost, and are flexible in network configuration.

Further, the present invention is not limited to these embodiments, but various variations and modifications may be made without departing from the scope of the present invention.

The present application is based on Japanese priority application No. 2003-019067 filed on 1, 28, 2003 with the Japanese Patent Office, the entire contents of that are hereby incorporated by reference.

## Claims

1. An optical transmission apparatus with an optical add/drop function used in an optical wavelength multiplex network, comprising:
an optical branching coupler for dividing an input wavelength multiplexed optical signal into a wavelength multiplexed optical signal, which is called a passing signal, and another wavelength multiplexed optical signal, which is called a dropping signal,
a filter for extracting a first optical signal at a predetermined wavelength from the dropping signal that is branched by the optical branching coupler,
a laser for generating a second optical signal that is to be inserted,
a blocking filter for blocking a third optical signal contained in the passing signal that is branched by the optical branching coupler, said third optical signal having a wavelength that is the same as the second optical signal that is to be inserted, and
an optical coupler for coupling the passing signal that is not blocked by and passes the blocking filter, and the second optical signal that is to be inserted.

2. The optical transmission apparatus as claimed in claim 1, wherein said blocking filter and said optical coupler are combined into one body.

3. The optical transmission apparatus as claimed in claim 1, wherein said filter for extracting the first optical signal at a predetermined wavelength from the dropping signal that is branched by the optical branching coupler is capable of changing the wavelength of the first optical signal to be extracted.

4. The optical transmission apparatus as claimed in claim 1, wherein said laser is capable of changing the wavelength of the second optical signal to be generated.

5. The optical transmission apparatus as claimed in claim 1, wherein said blocking filter passes only a predetermined group of wavelengths.

6. The optical transmission apparatus as claimed in claim 2, wherein said one body combining said blocking filter and said optical coupler passes only a predetermined group of wavelengths, and inserts only a predetermined group of wavelengths.

7. The optical transmission apparatus as claimed in claim 3, wherein said filter is one of an AOTF, a dielectric multilayer filter, an FGB type filter, and a Fabry-Perot type filter.

8. The optical transmission apparatus as claimed in claim 1, further comprising a protection unit that comprises an optical coupler and an optical switch.

9. An optical wavelength multiplex network, comprising:
the optical transmission apparatus as claimed in claim 1, and
a double ring network that comprises a HUB.

10. The optical wavelength multiplex network as claimed in claim 9, wherein said HUB comprises an optical demultiplexer, an optical coupler, an optical switch, and an optical multiplexer.

11. The optical wavelength multiplex network as claimed in claim 9, wherein said HUB comprises an optical filter.

12. The optical wavelength multiplex network as claimed in claim 9, wherein said HUB comprises an optical demultiplexer, a MEMS, and an optical multiplexer.

13. The optical wavelength multiplex network as claimed in claim 9, wherein said HUB comprises a protection unit that comprises an optical coupler and an optical switch.
